# DEMANDE DE BREVET EUROPEEN

(11) **EP 3 136 113 A1**
(43) Date de publication de la demande: **01.03.2017**
(21) Numéro de dépôt: 16185686.9
(22) Date de dépôt: 25.08.2016
(51) Int. Cl.: G01P 15/093, G01P 15/08

(54) **CAPTEUR D'ACCELERATION DE TYPE OPTIQUE**

(30) Priorité: 25.08.2015 CH 12222015
(71) Demandeur: Sercalo Microtechnology Ltd., 9494 Schaan (LI)
(72) Inventeur: Herbst, Peter, 9494 Schaan (LI); Marxer, Cornel, 9494 Schaan (LI)
(74) Mandataire: Riederer Hasler & Partner Patentanwälte AG

(57) **Abrégé**

L'invention concerne un capteur d'accélération de type optique comportant une masse sismique (12), pourvue d'une surface réfléchissante (16) mobile selon un axe de rotation, une fibre optique émettrice (10) couplée à une source de lumière (11), destinée à émettre un faisceau lumineux (L), par une de ses extrémités (8), en direction de la surface réfléchissante (16), et une fibre optique réceptrice (20) couplée à un détecteur optique (21), destinée à recevoir, par une de ses extrémités (9), le faisceau lumineux (L) renvoyé par la surface réfléchissante (16). Un mouvement de rotation de la surface réfléchissante (16) entraîne une déflexion du faisceau lumineux (L) et une variation de l'intensité lumineuse reçue par la fibre réceptrice (20). Une lentille convergente (30) est interposée, sur le trajet optique du faisceau lumineux, entre les fibres optiques (10, 20) et la masse sismique (12).

## Description

La présente invention se rapporte au domaine des accéléromètres. Elle concerne plus particulièrement un capteur d'accélération de type optique, couplant une masse sismique à au moins une fibre optique.

De tels accéléromètres sont connus de l'homme de métier et fonctionnent selon un principe générique simple : Une masse sismique coopère avec une fibre optique émettant un faisceau lumineux. Sous l'effet de l'accélération, la masse sismique se déplace, provoquant une déflexion du faisceau lumineux, laquelle fournit une indication de l'accélération. Ils sont destinés à la surveillance d'installations soumises à des environnements hostiles, tels que des générateurs éléctriques, des éoliennes, des trains, ou tout autre construction critique.

Différents dispositifs basés sur ce principe sont décrits dans l'état de la technique. Le document US2007/0247613, par exemple, divulgue un accéléromètre comportant une fibre optique émettrice et une fibre optique réceptrice alignées optiquement par rapport à une cible partiellement réflectrice et partiellement absorbante. Une masse sismique, solidaire des fibres optiques, se déplace sous l'effet de l'accélération, entraînant le désalignement des fibres optiques relativement à leur position initiale, et une variation de l'intensité lumineuse reçue par la fibre réceptrice. Le brevet US8770024 décrit un capteur d'accélération comprenant une fibre optique émettrice et une fibre optique réceptrice disposées en regard l'une de l'autre. La masse sismique est constituée par la fibre émettrice elle-même, qui oscille sous l'effet de l'accélération.

Le document US5437186, enfin, présente un accéléromètre composé d'une fibre optique émettrice, d'une fibre optique réceptrice et d'une masse sismique formée d'un élément plan mobile en rotation. Ladite masse sismique est classiquement constituée d'un élément micromécanique ou MEMS, de l'anglais Micro ElectroMechanical Systems, lequel comprend un cadre rigide et une plaque plane rigide qui lui est reliée par des poutres de flexion. L'extrémité de la fibre émettrice est montée solidaire de la plaque plane, vis à vis et à proximité immédiate de l'extrémité de la fibre réceptrice, montée sur le cadre. En position neutre, c'est à dire en l'absence d'accélération, les fibres optiques sont alignées et l'intensité lumineuse reçue par la fibre réceptrice est maximale. En présence d'une accélération perpendiculaire au plan de la masse sismique, la plaque plane se déplace en rotation, entraînant la fibre émettrice. Le faisceau lumineux émis est défléchi et le spot formé par l'impact du faisceau lumineux en entrée de la fibre réceptrice se déplace latéralement. La variation de l'intensité lumineuse reçue donne une indication de l'accélération.

Un tel dispositif, bien que fonctionnel et de conception simple, présente plusieurs inconvénients. En premier lieu, le contact entre les fibres optiques et le MEMS est problématique : Sa mise en oeuvre, par collage ou soudage, est malaisée et le mouvement de rotation de la plaque mobile s'en trouve perturbé, ce qui a un impact direct sur la justesse de la mesure. Par ailleurs, la disposition des fibres émettrice et réceptrice en regard l'une de l'autre n'est pas optimale. En effet, un tel dispositif est généralement enfermé dans un boîtier hermétique, en vue de le protéger de l'environnement extérieur. Les fibres optiques ainsi alignées émergent du boîtier par deux faces distinctes et opposées, ce qui confère au dispositif un encombrement important et complique l'intégration de l'accéléromètre au point de mesure. De plus, l'herméticité du boîtier est compromise par les fibres qui le traversent. Enfin, le déplacement du spot produit par l'impact du faisceau lumineux en entrée de la fibre réceptrice est fonction de la déflexion du faisceau lumineux, soit de la rotation α de la plaque plane. Plus précisément, le déplacement du spot est proportionnel à la tangente de l'angle α, environ égale à α pour des angles inférieurs ou égaux à 15°, et à la largeur de la masse sismique. Compte tenu des dimensions des MEMS, l'effet d'une faible accélération ne produit qu'un déplacement minime du faisceau lumineux, et, par suite, une très faible variation de l'intensité lumineuse reçue. La sensibilité de l'accéléromètre ainsi décrit est ainsi médiocre.

La présente invention a pour but de remédier aux inconvénients précités, en proposant un accéléromètre présentant une grande sensibilité de mesure alliée à une justesse accrue. De plus, la structure de l'accéléromètre selon l'invention permet une intégration facilitée du dispositif au point où la mesure doit être effectuée, grâce à la position des fibres en sortie du boîtier. Plus précisément, l'invention concerne un capteur d'accélération de type optique comportant une masse sismique, pourvue d'une surface réfléchissante mobile selon un axe de rotation, une fibre optique émettrice couplée à une source de lumière, destinée à émettre un faisceau lumineux, par une de ses extrémités, en direction de la surface réfléchissante, et une fibre optique réceptrice couplée à un détecteur optique, destinée à recevoir, par une de ses extrémités, le faisceau lumineux renvoyé par la surface réfléchissante, un mouvement de rotation de la surface réfléchissante entraînant une déflexion du faisceau lumineux et une variation de l'intensité lumineuse reçue par la fibre réceptrice. Selon l'invention, une lentille convergente est interposée, sur le trajet optique du faisceau lumineux, entre les fibres optiques et ladite masse sismique.

La présence d'une lentille convergente interposée entre les fibres émettrice et réceptrice de l'accéléromètre selon l'invention, introduit une distance physique entre les fibres et la masse sismique. Les effets produits sont la suppression du contact problématique entre les fibres et la masse sismique, et l'augmentation du trajet optique du faisceau lumineux entre les fibres émettrice et réceptrice. En terme de performance de l'accéléromètre, ces effets se traduisent par une amélioration de la justesse de la mesure et une sensibilité accrue. Pour un angle de déflexion α de la masse sismique donné, la géométrie du dispositif selon l'invention permet un déplacement substantiel du faisceau lumineux à l'entrée de la fibre réceptrice, et, par voie de conséquence, une sensibilité élevée à de faibles accélérations, comme il apparaîtra par la suite. Une autre conséquence de l'éloignement des fibres optiques de la masse sismique, est l'encapsulation facilitée de cette dernière dans un boîtier hermétique. Les fibres optiques étant distantes de la masse sismique, il est possible de les disposer à l'extérieur du boîtier hermétique, la lentille étant montée directement sur celui-ci. Cette structure est avantageuse car il est malaisé de monter des fibres optiques de façon hermétique à travers une séparation entre deux milieux. Enfin, on notera qu'au sein de l'accéléromètre selon l'invention, la fonction de la masse sismique est de réfléchir le faisceau lumineux émis dans une direction qui varie en fonction de l'accélération subie. Cette caractéristique autorise différentes positions relatives des axes longitudinaux des fibres optiques. En particulier, les fibres émettrices et réceptrices peuvent être parallèles et voisines l'une de l'autre, auquel cas elles et émergent du dispositif par une même face, et l'encombrement du dispositif est minimal.

D'autres caractéristiques et avantages de la présente invention apparaîtront à la lecture de la description qui suit, donnée uniquement à titre d'exemple et faite en référence aux dessins annexés dans lesquels :
- les figures 1 à 3 sont des vues schématiques de côté de différents modes de réalisation d'un accéléromètre de type optique selon l'invention,
- la figure 4 est une vue en perspective d'une masse sismique appartenant à l'accéléromètre selon l'invention, et
- la figure 5 illustre schématiquement le principe de détermination de l'accélération à l'aide de l'accéléromètre selon l'invention.

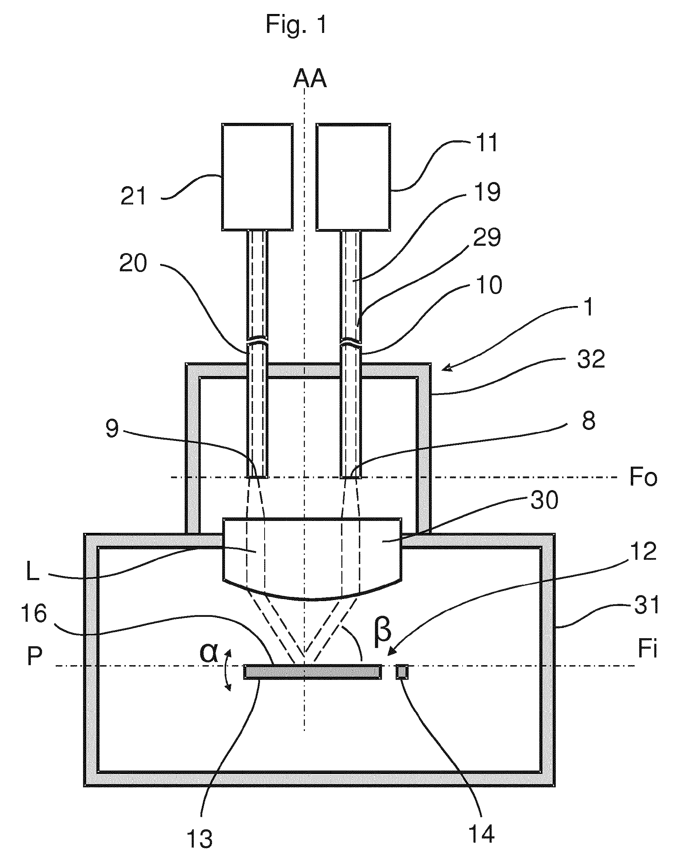

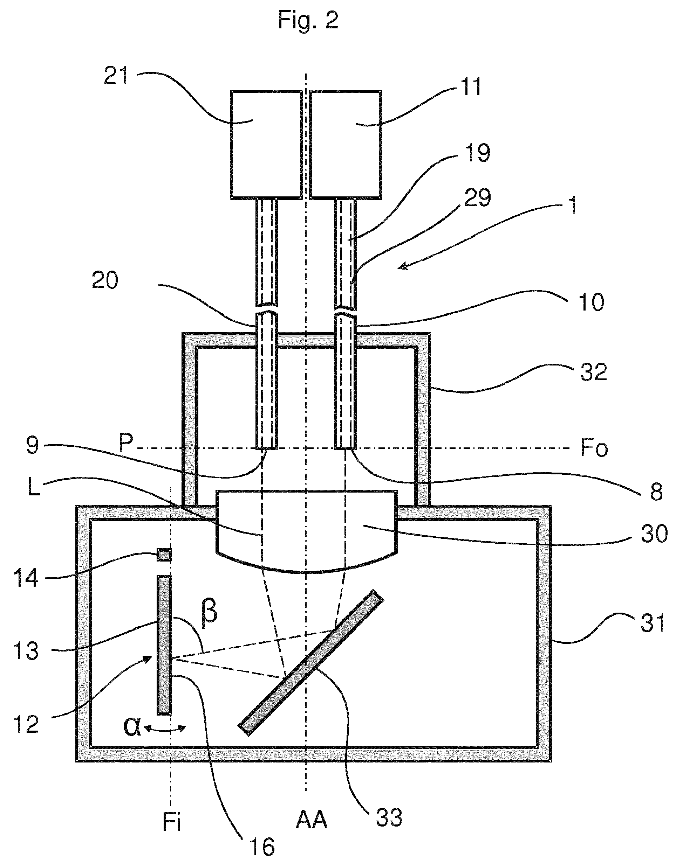

Le capteur d'accélération de type optique représenté schématiquement en figures 1 et 2, et référencé dans son ensemble 1, comporte classiquement une fibre optique émettrice 10, couplée à une source lumineuse 11, formée, par exemple, d'une LED (light emitting diode), d'une diode laser, ou autre. La fibre émettrice 10 est destinée à délivrer, par une de ses extrémités 8, un faisceau lumineux L, en direction d'une masse sismique 12 apte à se déformer élastiquement sous l'effet de l'accélération.

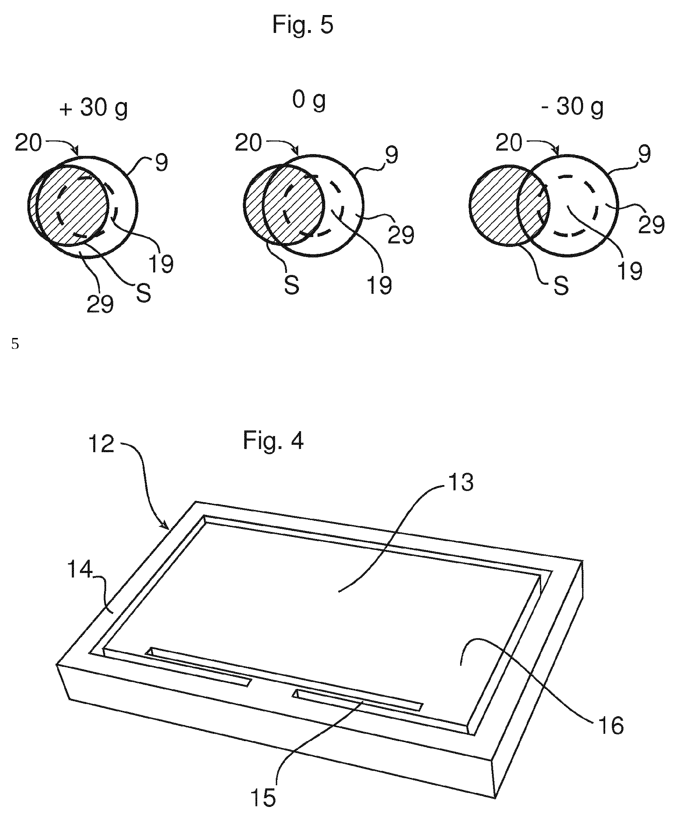

A cet effet, la masse sismique 12, illustrée en figure 4, est formée d'une plaque d'inertie 13 rigide, montée solidaire en rotation d'un cadre rigide 14 à l'aide de poutres de rappel 15, élastiques en torsion. En variante, les poutres de rappel 15 sont déformables en flexion. La plaque d'inertie 13 est pourvue d'une surface réfléchissante 16, tel qu'un miroir, un film métallique, ou autre, dont la fonction est de renvoyer le faisceau lumineux L. En position neutre, c'est à dire en l'absence d'accélération, la masse sismique 12 est plane et l'ensemble plaque d'inertie 13 / cadre 14 définit un plan P. Sous l'effet d'une accélération comportant une composante perpendiculaire au plan P, la plaque 13 se déplace en rotation par effet d'inertie, formant un angle α avec le plan P. La masse sismique 12 est, de façon avantageuse, constituée d'un élément micromécanique, ou MEMS, de l'anglais MicroElectroMechanichal System, lequel est fabriqué par des techniques de micro-usinage bien connues de l'homme de métier.

Le capteur 1 comporte encore une fibre optique réceptrice 20, couplée à un détecteur optique 21, de type photodiode ou phototransistor. Elle est destinée à collecter, par une des ses extrémités 9, le faisceau lumineux L émis par la fibre émettrice 10 et réfléchi par la plaque d'inertie 13. Les fibres émettrice 10 et réceptrice 20 sont classiquement formées d'un coeur 19 entouré d'une gaine 29.

Selon l'invention, une lentille convergente 30, d'axe optique AA, de distance focale F, de plan focal objet Fo et de plan focal image Fi, est interposée sur le trajet optique du faisceau lumineux L, à mi-distance entre les fibres optiques 10, 20, et la masse sismique 12. Les extrémités 8, 9, respectives des fibres émettrice et réceptrice 10, 20, sont situées dans le premier plan focal objet Fo de la lentille 30, tandis que le plan P défini par la masse sismique 12 est à distance focale F de la lentille 30.

Dans le mode de réalisation illustré en figure 1, le plan P défini par la masse sismique coïncide avec le plan focal objet Fo et les fibres émettrice 10 et réceptrice 20 sont parallèles à l'axe AA et essentiellement symétriques par rapport à l'axe AA. Cet agencement est particulièrement compact et permet un alignement simple des différents éléments optiques. Avantageusement, et tel qu'illustré en figure 5, les fibres émettrice 10 et réceptrice 20 sont légèrement décalées latéralement par rapport à la symétrie à l'axe AA. Ce décalage initial est de l'ordre de grandeur du rayon du coeur 19 de la fibre réceptrice 20, et permet de déterminer le sens de la vibration, comme il ressortira par la suite.

Un premier boîtier 31, de préférence hermétique, renferme la masse sismique 12 de manière à la protéger de l'atmosphère environnante, de la poussière ou de rayonnements parasites. La lentille 30 est montée hermétiquement sur le boîtier 31, par exemple, à l'aide d'un joint. En variante, le premier boîtier 31 n'est pas hermétique, mais étanche ou simplement fermé de manière à offrir une protection mécanique et optique. Les fibre optiques émettrice 10, et réceptrice 20 sont situées à l'extérieur du boîtier 31, leurs extrémités 8, 9 étant à distance focale de la lentille 30, de manière à, respectivement, injecter et recevoir le faisceau lumineux L. Un deuxième boîtier 32, monté accolé au premier boîtier 31, forme un compartiment fermé autour de la lentille 30 et de la portion terminale des fibres optiques 10, 20. L'interface entre le deuxième boîtier 32 et les fibres émettrice 10 et réceptrice 20 qui en émergent, est réalisée à l'aide d'un joint, ou d'une pièce rigide assurant un maintien desdites fibres, et une obstruction mécanique et optique.

Le fonctionnement du capteur d'accélération 1 selon l'invention est le suivant : En l'absence d'accélération, la surface réfléchissante 16 est perpendiculaire 20, à l'axe AA. Le faisceau lumineux L, émis par la fibre émettrice 10, traverse la lentille convergente 30 dont il ressort collimaté et dévié par rapport à la direction AA. Il frappe la surface réfléchissante 16 sous un angle d'incidence β, et est réfléchi sous ce même angle en direction de la lentille 30, dont il ressort parallèle à l'axe AA. Il est alors collecté par la fibre réceptrice 20, qui transmet un signal optique au détecteur 21. Grâce au décalage latéral initial des fibres 10, 20, le faisceau lumineux L impactant la fibre réceptrice 20 en position neutre, est décalé latéralement par rapport au coeur 19 de la fibre 20 de manière à transmettre uniquement 50 pourcents de l'intensité émise. Ce décalage initial du spot d'impact S sur l'extrémité 9 de la fibre réceptrice 20 est illustré en figure 5. Lorsque le capteur 1 est soumis à une accélération comportant une composante perpendiculaire au plan P, la plaque d'inertie 13 s'incline d'un angle α par rapport au plan P, et le faisceau lumineux L est réfléchi par la surface réfléchissante 16 sous un angle égal à β±2α. Par effet géométrique, cette variation angulaire entraîne un décalage latéral d du spot S par rapport à l'extrémité 9 de la fibre 20, lequel vient s'ajouter ou se soustraire au décalage initial, selon le sens de l'accélération subie. Cet effet, représenté à titre indicatif en figure 5, permet de donner une indication de l'intensité de l'accélération supportée, ainsi que de son sens. Par exemple, l'intensité lumineuse mesurée par le détecteur 21 est maximale pour une accélération positive de 30 g ; Elle est nulle pour une accélération négative de 30 g, g étant l'accélération terrestre qui est d'environ 9.81 m/s².

Ces valeurs sont indicatives, car la sensibilité du capteur d'accélération 1 dépend de la lentille 30 utilisée et de la sensibilité de la masse sismique 12 elle-même. Mais, à titre de comparaison avec l'accéléromètre divulgué dans le document US5437186, on relève que le décalage latéral du spot S en entrée de la fibre réceptrice 20 est proportionnel à la tangente 2α multiplié par la distance focale pour le capteur d'accélération 1 selon l'invention, alors qu'il est proportionnel à la tangente α multiplié par la distance entre les fibres pour l'état de la technique. Il en ressort que, pour une même masse sismique 12 et pour un angle de déflexion α faible, la sensibilité du capteur d'accélération 1 selon l'invention est augmentée d'un facteur d'au moins deux. En pratique cette augmentation peut atteindre un facteur 10. Par ailleurs, il est difficile de chiffrer l'amélioration de la justesse de la mesure, mais l'absence de contact entre les fibres 10, 20 et la masse sismique 12, contribue à éliminer les erreurs générées par l'assemblage de ces pièces.

On se réfère maintenant à la figure 2 représentant une variante de mode de réalisation du capteur d'accélération 1 selon l'invention. Ce mode de réalisation diffère du précédent en ce que l'axe AA de la lentille 30 est parallèle au plan P de la masse sismique 12, et en ce qu'un miroir intermédiaire 33 faisant un angle de 45° avec l'axe AA et le plan P, est interposé entre la lentille 30 et la masse sismique 12 de manière à diriger le faisceau lumineux L vers la surface réfléchissante 16. Cet agencement ne modifie en rien le fonctionnement de l'accéléromètre décrit précédemment, mais permet de mesurer une accélération dans une direction perpendiculaire à l'axe AA de la lentille 30, sans modifier l'orientation du capteur 1. Il est ainsi commode de disposer plusieurs capteurs selon l'invention côte à côte, de façon très compacte, aux fins de mesurer l'accélération selon plusieurs directions choisies.

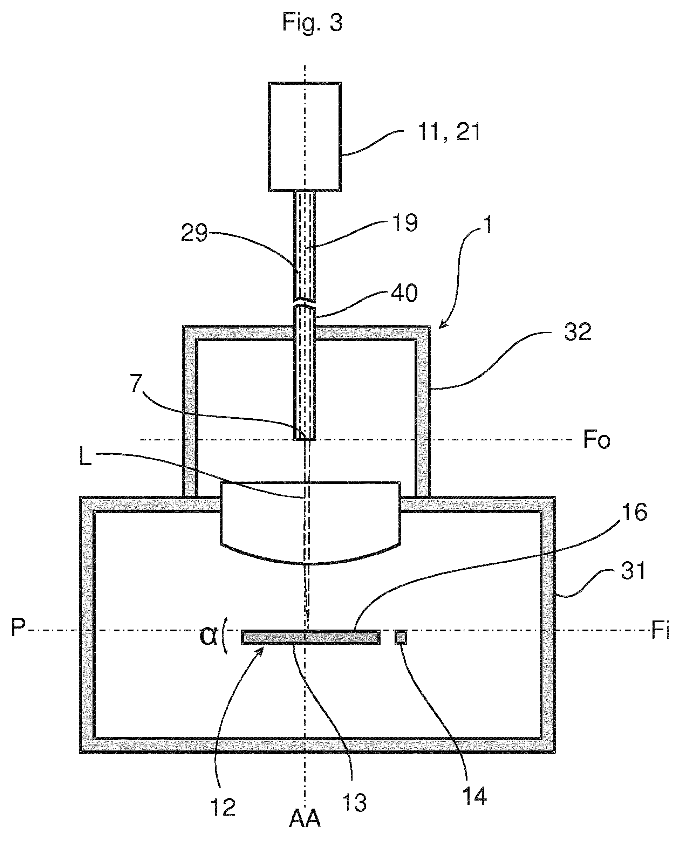

La figure 3, enfin, illustre une variante du mode de réalisation du capteur d'accélération 1 selon l'invention, dans laquelle les fibres respectivement émettrice 10 et réceptrice 20, sont confondues en une unique fibre 40. Celle-ci est alignée sur l'axe AA de la lentille 30 et elle est légèrement excentrée. Son extrémité 7 est située dans son plan focal objet Fo. La source lumineuse 11 et le détecteur optique 21 sont alors combinés par un coupleur optique. Ce mode de réalisation présente l'avantage de sa grande simplicité, particulièrement en ce qui concerne l'alignement optique, et par suite, ses coûts de fabrication sont réduits. Le principe de fonctionnement en est inchangé.

Ainsi a été décrit un capteur d'accélération de type optique, performant et facile à intégrer, grâce à sa structure innovante, en particulier grâce à l'utilisation d'une lentille convergente. Bien entendu, la présente invention ne se limite pas aux modes de réalisation décrits ci-dessus, mais s'étend à toutes les variantes à la portée de l'homme de métier, s'inscrivant dans le cadre des revendications ci-après.

## Revendications

1. Capteur d'accélération de type optique comportant :
- une masse sismique (12), pourvue d'une surface réfléchissante (16) mobile selon un axe de rotation,
- une fibre optique émettrice (10) couplée à une source de lumière (11), destinée à émettre un faisceau lumineux (L), par une de ses extrémités (8), en direction de la surface réfléchissante (16), et
- une fibre optique réceptrice (20) couplée à un détecteur optique (21), destinée à recevoir, par une de ses extrémités (9), le faisceau lumineux (L) renvoyé par la surface réfléchissante (16),
un mouvement de rotation de ladite surface réfléchissante (16) entraînant une déflexion du faisceau lumineux (L) et une variation de l'intensité lumineuse reçue par ladite fibre réceptrice (20), **caractérisé en ce qu'**une lentille convergente (30) est interposée, sur le trajet optique du faisceau lumineux, entre lesdites fibres optiques (10, 20) et ladite masse sismique (12).

2. Capteur d'accélération selon la revendication 1, **caractérisé en ce que** ladite lentille (30) est d'axe optique AA, de distance focale F, de plan focal objet Fo, et **en ce que** lesdites extrémités (8, 9) respectivement des fibres émettrice (10) et réceptrice (20) sont situées dans le plan focal objet Fo.

3. Capteur d'accélération selon l'une des revendications 1 et 2, **caractérisé en ce que** ladite lentille (30) est de plan focal image Fi, et **en ce que** ladite masse sismique (12) est plane et définit un plan P coïncidant avec le plan focal image Fi.

4. Capteur d'accélération selon l'une des revendications 1 et 2, **caractérisé en ce que** ladite lentille (30) est de plan focal image Fi, et **en ce que** ladite masse sismique (12) est plane et définit un plan P perpendiculaire au plan focal objet Fo, un miroir (33) étant disposé à 45° par rapport à l'axe AA est interposé entre ladite lentille (30) et ladite masse sismique (12) de manière à diriger ledit faisceau lumineux (L) vers la surface réfléchissante (16).

5. Capteur d'accélération selon l'une des revendications 1 à 4, **caractérisé en ce que** 5lesdites fibres optiques (10, 20) sont parallèles à l'axe AA et essentiellement symétriques par rapport audit axe AA.

6. Capteur d'accélération selon l'une des revendications 1 à 5, **caractérisé en ce que** lesdites fibres émettrice (10) et réceptrice (20) sont distinctes.

7. Capteur d'accélération selon l'une des revendications 1 à 5, **caractérisé en ce que** lesdites fibres émettrice (40) et réceptrice (40) sont confondues.

8. Capteur d'accélération selon l'unes des revendications 1 à 7, **caractérisé en ce que** l'alignement des fibres optiques (10, 20), de la lentille (30) et de la masse sismique (12) est tel que le faisceau lumineux (L) est décalé d'environ la moitié de sa section en entrée de la fibre optique réceptrice (20) lorsque l'accélération est nulle.

9. Capteur d'accélération selon l'une des revendications 1 à 8, **caractérisé en ce que** ladite masse sismique (12) est formée d'une plaque d'inertie (13), pourvue de ladite surface réfléchissante (16), montée solidaire en rotation sur un cadre rigide (14) par l'intermédiaire de poutres de rappels (15) déformables en torsion.

10. Capteur d'accélération selon l'une des revendications 1 à 8, **caractérisé en ce que** ladite masse sismique (12) est formée d'une plaque d'inertie (13), pourvue de ladite surface réfléchissante (16), montée solidaire en rotation sur un cadre rigide (14) par l'intermédiaire de poutres de rappel (15) déformables en flexion.

11. Capteur d'accélération selon l'une des revendications 1 à 10, **caractérisé en ce qu'**il comporte encore un premier boîtier (31) dans lequel prend place ladite masse sismique (12) et sur lequel est montée ladite lentille convergente (30).

12. Capteur d'accélération selon la revendication 11, **caractérisé en ce qu'**il comporte encore un deuxième boîtier (32) monté accolé audit premier boîtier (31), dans lequel prennent place lesdites extrémités (8, 9) des fibres émettrice (10) et réceptrice (20).
